# EUROPEAN PATENT SPECIFICATION

(11) **EP 3 091 256 B1**
(45) Date of publication and mention of the grant of the patent: **21.08.2019**
(21) Application number: 15166465.3
(22) Date of filing: 05.05.2015
(51) Int. Cl.: F16H 59/10, F16H 59/02, F16H 61/36, F16H 63/34

(54) **SHIFT BY WIRE SHIFTING DEVICE**
SHIFT BY WIRE SCHALTVORRICHTUNG
CHANGEMENT DE VITESSE PAR shift by wire

(43) Date of publication of application: 09.11.2016
(73) Proprietor: Fico Triad, S.A., 08028 Barcelona (ES)
(72) Inventor: Abad Garcia, Daniel, 08232 Viladecavalls (ES); Moreno Colom, Javier, 08232 Viladecavalls (ES)
(74) Representative: ZBM Patents - Zea, Barlocci & Markvardsen

(56) References cited:
- DE-B3-102008 028 614
- US-A1- 2014 053 674

## Description

### TECHNICAL FIELD

Shift by wire shifting devices for automatic vehicle transmissions in motor vehicles are disclosed herein.

### BACKGROUND

Shift by wire shifting devices are used in modern automatic transmissions in motor vehicles where shifting commands are sent from a selector lever by means of electric or electronic signals to a control unit for controlling a vehicle transmission.

Also in modern shifting devices, locking of a vehicle transmission, for example acting on the parking brake or the motor vehicle gearbox, may be carried out electrically or electronically and/or mechanically. The parking brake of the motor vehicle may be actuated when the vehicle is stopped in a parking position, that is, when the vehicle is parked and with the engine off.

Mechanical actuation for locking a vehicle transmission such as acting on the parking brake is often preferred for example in case of failure of the electronic system or the electric power supply. Mechanical actuation for locking a vehicle transmission is usually carried out through a driving member, such as for example a mechanical cable, provided between the selection lever and the vehicle transmission. The cable serves the purpose of manually operating the parking brake when a parking position is selected by a driver through the selection lever.

The driving member or cable has a first end that is permanently coupled to the vehicle transmission and a second end that is releasably engageable with an engaging portion of the selector lever. In use, when a parking position is selected the second end of the driving member is engaged with the selector lever so that the selector lever is connected to the gearbox keeping the motor vehicle in the parking position.

Document US2013074632 describes one example of such shift by wire shifting devices having a mechanism for driving a parking cable when the gearshift lever is operated into a parking position. For this purpose, a selector lever lock is provided adapted for preventing the selector lever from being moved when the motor vehicle is in a parking position.

A further example of such shift by wire shifting devices is disclosed in US2014053674. A transmission mechanism is provided comprising a driving lever. The driving lever is linked to a vehicle transmission through a cable. The cable is in turn linked to a vehicle parking brake mechanism for locking the vehicle transmission. According to a travel of the selector lever, the driving lever either performs a shifting operation when the selector lever assembly is actuated or does not perform a shifting operation while allowing the remaining shifting operations to be performed.

DE-B3-102008028614 discloses a shift by wire shifting device for a vehicle automatic transmission, which, in the opinion of the examining division of the European Patent Office, falls within the pre-characterizing portion of claim 1.

Said device comprises a selector lever an a cable pull lever that is actuated when the selector lever is operated to the parking position or out of the parking position for locking a vehicle transmission. The cable pull lever engages at least partially with a cam disk arranged on the lever axle and a projection that can be driven by the cam disk when the selector lever is moved into the parking position such that the cable pull lever is moved from a driving position into the parking position and another projection driven by the cam disk when the selector lever is moved out of the parking position.

Although the prior art shift by wire shifting devices with mechanical actuation of the parking brake or the motor vehicle gearbox have been shown to be advantageous, it has been found that one engaging end portion of the driving member, e.g. the cable, may in some cases be positioned incorrectly relative to a corresponding engaging portion of the selector lever. This may result in that that the engagement of the driving member with the selector lever when selecting a parking position could be difficult or even not possible. This may require the driving member to be arranged in a proper position relative to the selector lever in order to control the vehicle transmission properly, for example moving the selector lever into or out of the parking position. This may happen both when in use and as a result of the manufacturing process.

Arrangements have been proposed in the art in an attempt to avoid the above mentioned disadvantage. One known arrangement is to provide a pin associated with the selector lever adapted to run along a guide associated with the driving member. However, in shift by wire shifting devices with manual function this kind of arrangements have been shown not to be reliable since the pin can get out of the guide of the driving member in operation. To avoid this issue, the guide and the pin should be redesigned and their dimensions increased. This undesirably increases costs and space required for assembly and the resulting arrangement could interfere with surrounding parts.

### SUMMARY

According to the present invention, the above mentioned problems are solved by a shift by wire shifting device according to claim 1.

Preferred embodiments are laid down in the dependent claims.

The present shifting device is of the shift by wire type where a vehicle transmission is controlled through electronic controls. No mechanical linkages are provided between the selector lever and the vehicle transmission other than a mechanical driving member. Such mechanical driving member acts when actuating the selector lever into a parking position for locking the vehicle transmission or when actuating the selector lever out of the parking position for unlocking the vehicle transmission.

Within the meaning of the present invention, different shifting positions refer to several different gearshift positions that can be selected by the user or driver by actuating a vehicle selector lever, such as park P, reverse R, neutral N and drive D positions. Other shifting positions may be possible according to specific requirements and shifter models. Shifting operations will therefore result when going from one shifting position to another different shifting position, for example from P to R and vice versa, or the like.

Also within the meaning of the present invention, locking stands for preventing a part from being moved, for example rotated, displaced, and in general for holding such part in position.

Also within the meaning of the present invention, locking a vehicle transmission refers to acting on a part of a motor vehicle in a way that it is prevented from being displaced, such as for example on the brakes (e.g. the parking brake) or on the motor vehicle gearbox.

The present shift by wire shifting device comprises a selector lever that is movably (e.g. pivotally) mounted to a housing fixed to the motor vehicle. The selector lever is thus movable for selecting shift commands for controlling the transmission of the motor vehicle in at least one of the above mentioned P, R, N, D positions.

A connecting member is also provided. The connecting member is adapted for locking a vehicle transmission. Such connecting member is rotatably mounted on the above mentioned fixed housing. The connecting member is designed such that it is releasably connectable with the above mentioned selector lever. The connecting member is attached to or is formed integral with a driving member. In one example, the driving member may be a cable assembly such as for example a push pull cable assembly A locking mechanism associated both with the selector lever and the connecting member is also provided. When a parking position is selected by a user, i.e. a driver, through the selector lever, the connecting member, with the driving member attached thereto, is connected to the selector lever for locking a vehicle transmission. Due to the locking mechanism, the driving member is releasably locked in the parking position such that it can not be moved while the vehicle transmission is unlocked when a position out of a parking position is selected by the selector lever.

With the above described design, packaging size is advantageously minimized. In addition, the above described design ensures that the driving member is retained in position when the gear shift is out of the parking position thus providing a proper coupling of the selector lever with the driving member when in the parking position.

According to the present invention, the connecting member comprises an engaging end portion. Said engaging end portion of the connecting member is adapted for releasably receiving a corresponding engaging portion associated with the selector lever. When the user selects a parking position through the selector lever, the engaging portion of the connecting member and the engaging portion of the selector lever engage each other causing the vehicle transmission to be locked. When a position out of the parking position is selected by the user through the selector lever, said engaging portions are disengaged from each other causing the vehicle transmission to be unlocked. In this position, that is, any position other than the parking position, the locking mechanism is arranged so as to retain the driving member such that it can not be moved keeping the vehicle transmission unlocked.

The locking mechanism may include a first locking member associated with the driving member. The first locking member may be formed integral with the driving member or it may be a separate part attached to the driving member by any suitable means if required. The first locking member is moved, e.g. rotated, as the driving member is actuated by the selector lever. When a position out of a parking position is selected by the selector lever, the selector lever and the driving member are disengaged from each other, thus, the first locking member is locked in position. As a result, the driving member is also locked in position.

The locking mechanism may further include a corresponding locking member associated with the selector lever. The selector lever locking member may be formed integral with the selector lever or it may be a separate part attached to the selector lever by any suitable means if required. Still in further examples, the selector lever locking member may be attached either directly to the selector lever or to a base portion to which the selector lever is fitted.

In one preferred example, the first locking member and the selector lever locking member each has a curved locking edge. Such curved locking edges are adapted to define together a curved locking interface when the first locking member and the selector lever locking member are locked to each other which occurs when a position out of a parking position is selected by the selector lever.

The selector lever locking member is moved when the selector lever is moved. Thus, in a specific position of the selector lever, the selector lever locking member is positioned such that the first locking member is locked in position, e.g. it is not allowed to be rotated, preventing the driving member from being moved. In the locked position, for example, the first locking member and the selector lever locking member may be releasably locked to each other through press fitting. Other different ways for releasably locking both parts may be considered such as friction coupling, and other similar means whether they are mechanical or any other type.

The driving member may be provided with a second locking member. The second locking member may be formed integral with the driving member or it may be attached thereto by any suitable means, as required, forming an angle relative to the first locking member. The second locking member is thus moved together with the driving member. In one example, the second locking member may be rotated as the driving member is actuated when the selector lever is moved. When a position out of a reverse position R is selected by the selector lever, the second locking member is releasably locked in position, for example. In such position, the second locking member is locked by the selector lever also causing the driving member to be locked in position, e.g. it is not allowed to be rotated, preventing the driving member from being moved.

The present shift by wire shifting device can be applied to a wide range of models including manual shifting devices. In shift by wire shifting devices with manual gear selection, the selector lever may be formed with a cross axis member or it may be attached thereto by any suitable means. The cross axis member may be adapted to allow longitudinal and lateral pivotal movement of the selector lever for allowing both automatic and manual gear shifting modes. In this case, the selector lever locking member may be formed with said cross axis member or it may be attached thereto. When the shift by wire shifting device is not provided with manual shifting devices, the cross axis member is not required.

Additional objects, advantages and features of examples of the present shift by wire shifting device will become apparent to those skilled in the art upon examination of the description, or may be learned by practice thereof.

### BRIEF DESCRIPTION OF THE DRAWINGS

Particular embodiments of the present shift by wire shifting device will be described in the following by way of a non-limiting example. Said example is given hereinbelow with reference to the appended drawings.

In the drawings:
Figure 1 is a general perspective view of one example of the present shift by wire shifting device;
Figure 2 is a perspective view of one example of a connecting member;
Figures 3-6 are elevational views of the shift by wire shifting device in figure 1 shown in park P, reverse R, neutral N and drive D positions, respectively; and
Figure 7 is a fragmentary enlarged view of the shift by wire shifting device in figures 3-6 showing the locking mechanism 140 in detail.

### DETAILED DESCRIPTION OF EXAMPLES

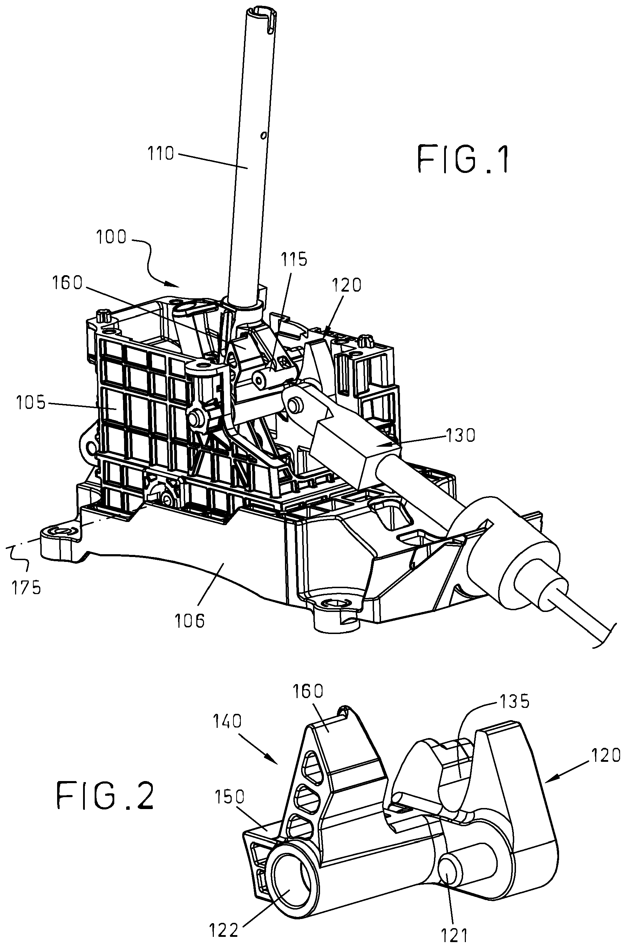

The non-limiting example of the present shift by wire shifting device shown in the figures 1-7 of the drawings is designated as a whole by reference numeral 100. The shift by wire shifting device 100 of the example shown comprises a pivotable selector lever 110. The selector lever 110 is pivotally mounted on a housing 105. The housing 105 has a lower base 106 formed therein or attached thereto. The lower base 106 is adapted to be fixed to a motor vehicle.

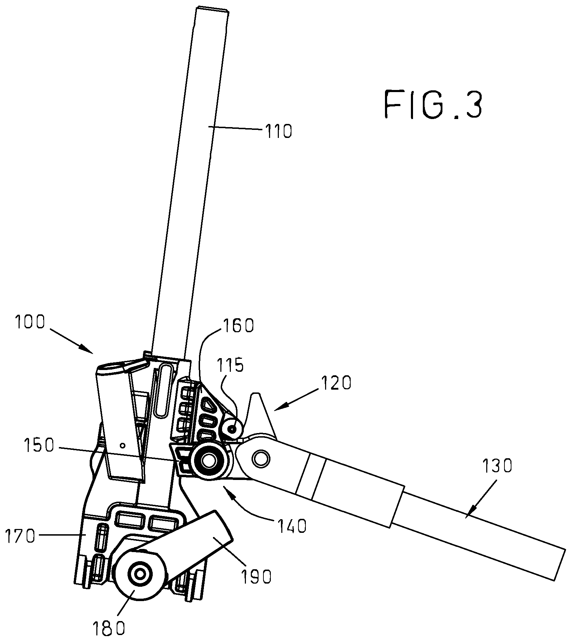

The selector lever 110 in the particular example shown in the figures is embedded in a selector lever base portion 170. The selector lever base portion 170 has an axis of rotation 175 around which the selector lever 110 can be rotated for selecting shift commands for the transmission of the motor vehicle in at least one of the P, R, N, D positions depicted in figures 3-6 of the drawings.

The shift by wire shifting device 100 shown in the figures further includes a connecting member 120 pivotally mounted to the fixed housing 105. The connecting member 120 has been illustrated separately in figure 2 for the sake of clarity. The purpose of the connecting member 120 is to lock the vehicle transmission when a P position is selected through the selector lever 110 as it will be explained hereinbelow.

Now referring to figure 2 of the drawings, the connecting member 120 comprises a pin 121 projecting laterally from the connecting member 120. The pin 121 is adapted to be inserted in a hole formed at one end of a driving member 130. This allows the connecting member 120 to be pivoted to the driving member 130. In the non-limiting example shown in figures 1 and 3-6, the driving member is a push pull cable assembly 130. Other types of driving member 130 are also possible.

Continuing with figure 2 of the drawings, the connecting member 120 further comprises a pivot portion 122. In the specific example shown in figure 2, the pivot portion 122 is a hollow portion adapted for receiving a shaft, not shown, passing across the fixed housing 105. Other configurations for the pivot portion 122 are of course possible as long as they are capable of allowing the connecting member 120 to be pivoted to the fixed housing 105.

First and second locking members 150, 160 are also formed in the connecting member 120 as shown in figure 2. The first locking member 150 and the second locking member 160 are positioned in the ***connecting member 120*** at an angle to each other. In the specific example illustrated in figure 2, the first and second locking members 150, 160 are positioned at an angle greater than 90° to each other. Other angles are of course possible.

The first and second locking members 150, 160 together with a locking member 190 that is formed in the selector lever 110 all define a locking mechanism 140. The locking mechanism 140 comprising said locking members 150, 160, 190 is adapted to releasably lock the connecting member 120 and thus the cable assembly 130 when a position out of a P position is selected by a driver through the selector lever 110. In such gearshift position out of a P position, the vehicle transmission is kept unlocked such that the motor vehicle can move.

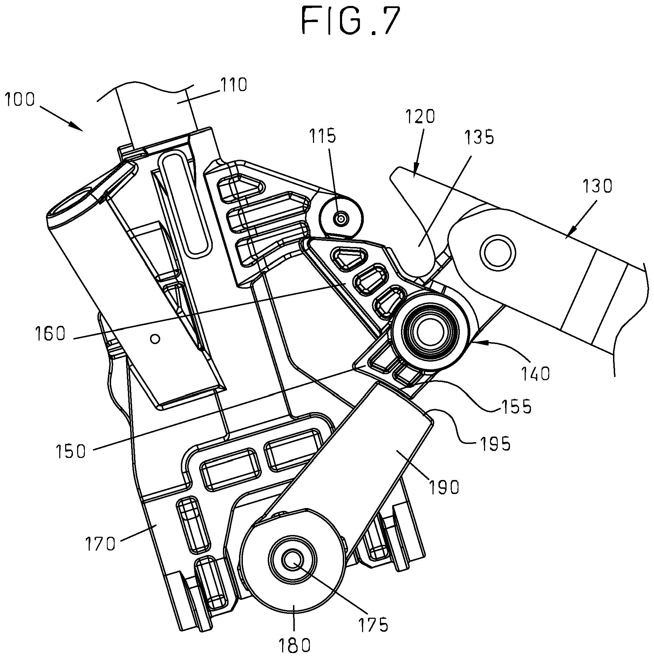

As shown in figure 7, in order to enhance locking between the first locking member 150 and the selector lever locking member 190, each locking member 150, 190 has a curved locking edge 155, 195. Said locking edges 155, 195 are curved to have substantially the same bend radius so as to defining together a curved locking interface. Due to this geometry, locking between the first locking member 150 and the selector lever locking member 190 when a position out of a parking position is selected is enhanced. The bend radius of the locking interface is defined by the line between one point of the axis of rotation 175 and one point of said locking edges 155, 195.

Still continuing with figure 2 of the drawings, the connecting member 120 further comprises an engaging end portion 135 which has been also illustrated

The recess 135 is shaped to releasably receive a corresponding engaging portion 115 of the selector lever 110. The engaging portion of the selector lever 110 in the example shown in the figures is a pin 115 laterally extending from the selector lever 110 as shown in figures 1 and 3-6. The pin 115 of the selector lever 110 defines a substantially T-shaped member adapted to releasably connect the selector lever 110 with the connecting member 120 of the cable assembly 130. This occurs when the pin 115 becomes received into the recess 135 when the P position is selected for locking the vehicle transmission.

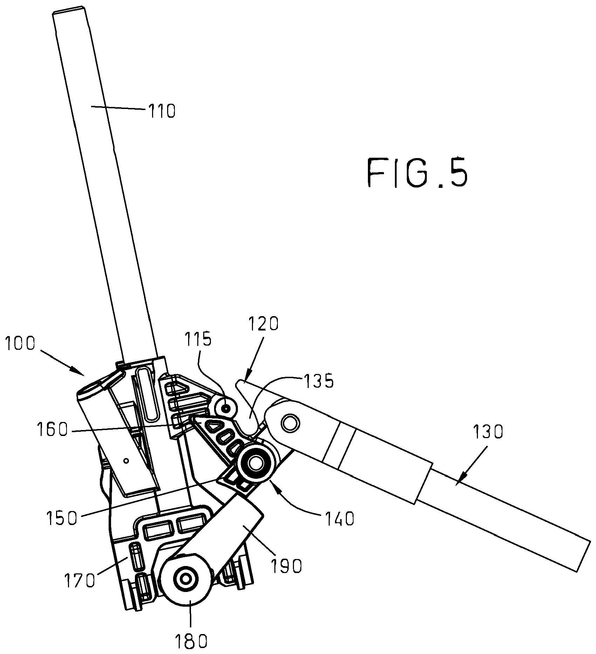

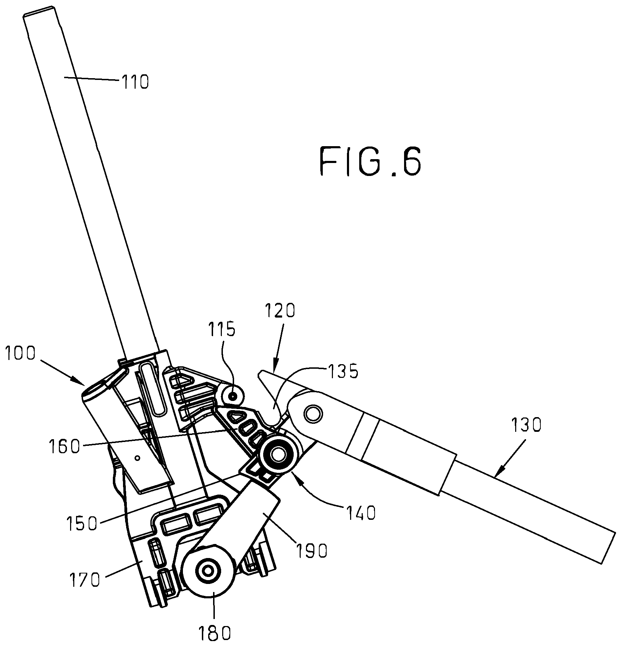

Referring again to figures 2 and 6 of the drawings, the second locking member 160 of the cable assembly 130 is adapted to be releasably locked in position against the pin (or engaging portion) 115 of the selector lever 110 when a position out of a reverse position R shown in figures 5, 6 is selected by the selector lever 110.

In the specific example shown in the figures, the shift by wire shifting device 100 allows a manual shifting mode for performing manual gearshifting operations (M/M+/M-). For this purpose, a cross axis member 180 is provided. The cross axis member 180 comprises a body having a first transverse axis that corresponds to the axis of rotation 175 of the base portion 175 shown in figure 1, and a second longitudinal axis (not shown) perpendicular thereto. The first transverse axis 175 of the cross axis member 180 allows the selector lever 110 to be pivoted in a substantially longitudinal direction in an automatic gearshift mode for gearshift selection into for example park P, reverse R, neutral N and drive D positions. The second longitudinal axis175 of the cross axis member 180 allows the selector lever 110 to be pivoted in a lateral direction for manual gearshift selection.

The operation of the shift by wire shifting device 100 of the example shown is described with reference to figures 3-6 of the drawings. Starting from a parking position (P position, figure 3), the selector lever 110 is connected to the cable assembly 130 by having its pin 115 received into the recess 135 of the connecting member 120. In this position, the vehicle transmission is locked, that is, the motor vehicle is braked or has its gearbox locked.

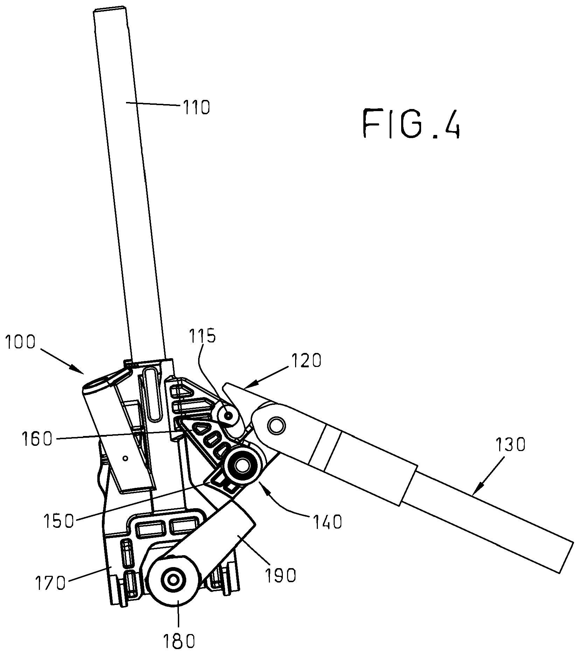

When the user selects a gearshift position out of the P position, for example by moving the selector lever 110 into a reverse position (R position, figure 4) the pin 115 of the selector lever 110 is disengaged from the recess 135 of the connecting member 120. This results in the vehicle transmission to be unlocked such that the vehicle can move.

As a gearshift position out of the P position is selected, pivotal movement of the selector lever 110 causes a corresponding pivotal movement of the selector lever locking member 190 whose free end approaches the free end of the first locking member 150 of the cable assembly 130. Further pivotal movement of the selector lever 110 out of the R position into other gearshift positions such as N, D positions shown in figures 5 and 6 causes the second locking member 160 of the cable assembly 130 to be locked in position. In addition, in the gearshift positions N, D shown in figure 5 and 6 the selector lever locking member 190 becomes locked against the first locking member 150 retaining the cable assembly 130 in position with the pin 115 of the selector lever 110 disengaged from the recess 135 of the connecting member 120 and thus with the vehicle transmission unlocked.

Although only a number of particular embodiments and examples of the present shift by wire shifting device have been disclosed herein, it will be understood by those skilled in the art that other alternative examples and/or uses and obvious modifications and equivalents thereof are possible. Furthermore, the present disclosure covers all possible combinations of the particular examples described. Thus, the scope of the present disclosure should not be limited by particular examples, but should be determined only by a fair reading of the claims that follow.

Reference signs related to drawings and placed in parentheses in a claim, are solely for attempting to increase the intelligibility of the claim, and shall not be construed as limiting the scope of the claim.

## Claims

1. A shift by wire shifting device (100) comprising a selector lever (110) movably mounted to a fixed housing, a connecting member (120) rotatably mounted on the fixed housing (105) and releasably connectable with the selector lever (110) for locking a vehicle transmission through a driving member (130) when a parking position (P) is selected, and a locking mechanism (140) associated with the selector lever (110) and the connecting member (120) for releasably locking the driving member (130) and keeping the vehicle transmission unlocked when a position out of a parking position (P) is selected by the selector lever (110),
**characterized in that**
the connecting member (120) has an engaging end portion that is configured as a recess (135) adapted for releasably receiving a corresponding engaging portion of the selector lever (110) that is configured as a pin (115) laterally extending from the selector lever (110) and defining a substantially T-shaped member adapted to releasably connect the selector lever (110) with the connecting member (120) such that:
- when a parking position (P) is selected by the selector lever (110), the engaging portions (115, 135) are engaged to each other locking the vehicle transmission, and
- when a position out of the parking position (P) is selected by the selector lever (110), the engaging portions (115, 135) are disengaged from each other unlocking the vehicle transmission and the locking mechanism (140) becomes locked so as to retain the driving member (130) in a position such that it can not be moved.

2. The device (100) according to claim 1, wherein the locking mechanism (140) includes a first locking member (150) associated with the connecting member (120) and movable therewith, which is adapted to be locked in position when a position out of a parking position (P) is selected by the selector lever (110).

3. The device (100) according to claim 2, wherein the first locking member (150) is formed integral with the connecting member (120).

4. The device (100) according to claim 2 or 3, wherein the locking mechanism (140) further includes a selector lever locking member (190) associated with the selector lever (110) and movable therewith to lock the first locking member (150) in position and thus the driving member (130) when a position out of a parking position (P) is selected by the selector lever (110).

5. The device (100) according to claim 4, wherein the selector lever locking member (190) is formed integral with the selector lever (110).

6. The device (100) according to claim 4 or 5, wherein the first locking member (150) is adapted to be releasably locked against the selector lever locking member (190) through press fitting.

7. The device (100) according to any of the claims 4-6, wherein the selector lever locking member (190) is attached to a base portion (170) to which the selector lever (110) is fitted.

8. The device (100) according to any of the claims 4-7, wherein the selector lever (110) is formed with or is attached to a cross axis member (180) adapted to allow longitudinal and lateral pivotal movement of the selector lever (110) for manual gear shifting operations, the selector lever locking member (190) being formed with or being attached to the cross axis member (180).

9. The device (100) according to any of the preceding claims, wherein it further includes a second locking member (160) associated with the connecting member (120) and movable therewith, which is adapted to be locked in position when a position out of a reverse position (R) is selected by the selector lever (110).

10. The device (100) according to claim 9, wherein the first locking member (150) and the second locking member (160) are positioned in the connecting member (120) at an angle to each other.

11. The device (100) according to claim 9 or 10, wherein the second locking member (160) is adapted to be releasably locked in position against the engaging portion (115) of the selector lever (110) when a position out of a reverse position (R) is selected by the selector lever (110).

12. The device (100) according to any of the preceding claims, wherein the driving member is a push pull cable assembly (130).

13. The device (100) according to any of the claims 4-12, wherein the first locking member (150) and the selector lever locking member (190) have corresponding curved locking edges (155, 195) adapted to define together a curved locking interface when the first locking member (150) and the selector lever locking member (190) are locked to each other when a position out of a (P) position is selected by the selector lever (110).

## Patentansprüche

1. Eine Shift-by-Wire-Schaltvorrichtung (100) umfassend einen Wählhebel (110), der an einem befestigten Gehäuse bewegbar montiert ist, ein Verbindungselement (120), das drehbar auf dem befestigten Gehäuse (105) montiert ist und mit dem Wählhebel (110) lösbar verbunden werden kann, um das Schaltgetriebe eines Fahrzeugs durch ein Antriebselement (130) zu sperren, wenn eine Parkposition (P) ausgewählt wird, und einen Sperrmechanismus (140), der mit dem Wählhebel (110) und dem Verbindungselement (120) verknüpft ist, um das Antriebselement (130) lösbar zu arretieren und das Schaltgetriebe des Fahrzeugs entsperrt zu halten, wenn eine Position aus einer Parkposition (P) durch den Wählhebel (110) ausgewählt wird,
**dadurch gekennzeichnet, dass**
das Verbindungselement (120) einen Eingriffsendteil hat, der als eine Einbuchtung (135) konfiguriert ist, die angepasst ist, um einen entsprechenden Eingriffsteil des Wählhebels (110) lösbar zu empfangen, der als ein Zapfen (115) konfiguriert ist, der sich seitlich vom Wählhebel (110) hinaus erstreckt und ein im Wesentlichen T-förmiges Element bildet, das angepasst ist, um den Wählhebel (110) mit dem Verbindungselement (120) lösbar zu verbinden, so dass:
- wenn eine Parkposition (P) durch den Wählhebel (110) ausgewählt wird, die Eingriffsteile (115, 135) ineinander eingreifen, wodurch das Schaltgetriebe des Fahrzeugs gesperrt wird, und
- wenn eine Position aus der Parkposition (P) durch den Wählhebel (110) ausgewählt wird, die Eingriffsteile (115, 135) sich voneinander lösen, wodurch das Schaltgetriebe des Fahrzeugs entsperrt wird und der Sperrmechanismus (140) gesperrt wird, um das Antriebselement (130) in einer Position festzuhalten, so dass es nicht bewogen werden kann.

2. Die Vorrichtung (100) nach Anspruch 1, wobei der Sperrmechanismus (140) ein erstes Sperrelement (150) umfasst, das mit dem Verbindungselement (120) verknüpft ist und zusammen mit diesem bewogen werden kann, welches angepasst ist, um in einer Position arretiert zu werden, wenn eine Position aus einer Parkposition (P) durch den Wählhebel (110) ausgewählt wird.

3. Die Vorrichtung (100) nach Anspruch 2, wobei das erste Sperrelement (150) einstückig mit dem Verbindungselement (120) gebildet ist.

4. Die Vorrichtung (100) nach Anspruch 2 oder 3, wobei der Sperrmechanismus (140) weiterhin ein Wählhebelsperrelement (190) umfasst, das mit dem Wählhebel (110) verknüpft ist und zusammen mit diesem bewogen werden kann, um das erste Sperrelement (150) und somit das Antriebselement (130) in Position zu arretieren, wenn eine Position aus einer Parkposition (P) durch den Wählhebel (110) ausgewählt wird.

5. Die Vorrichtung (100) nach Anspruch 4, wobei das Wählhebelsperrelement (190) einstückig mit dem Wählhebel (110) gebildet ist.

6. Die Vorrichtung (100) nach Anspruch 4 oder 5, wobei das erste Sperrelement (150) angepasst ist, um am Wählhebelsperrelement (190) durch Presspassung lösbar arretiert zu werden.

7. Die Vorrichtung (100) nach einem der Ansprüche 4-6, wobei das Wählhebelsperrelement (190) an einem Basisteil (170) befestigt ist, an den der Wählhebel (110) angepasst wird.

8. Die Vorrichtung (100) nach einem der Ansprüche 4-7, wobei der Wählhebel (110) mit einem Querachsenelement (180) gebildet ist, oder an diesem befestigt ist, das angepasst ist, um eine Drehbewegung des Wählhebels (110) in Längsrichtung und seitlich für manuelle Schaltungen zu ermöglichen, wobei das Wählhebelsperrelement (190) mit dem Querachsenelement (180) gebildet ist oder an diesem befestigt ist.

9. Die Vorrichtung (100) nach einem der vorhergehenden Ansprüche, wobei sie weiterhin ein zweites Sperrelement (160) umfasst, das mit dem Verbindungselement (120) verknüpft ist und zusammen mit diesem bewogen werden kann, welches angepasst ist, um in einer Position arretiert zu werden, wenn eine Position aus einer Rückwärtsposition (R) durch den Wählhebel (110) ausgewählt wird.

10. Die Vorrichtung (100) nach Anspruch 9, wobei das erste Sperrelement (150) und das zweite Sperrelement (160) im Verbindungselement (120) in einem Winkel zueinander angeordnet sind.

11. Die Vorrichtung (100) nach Anspruch 9 oder 10, wobei das zweite Sperrelement (160) angepasst ist, um in Position am Eingriffsteil (115) des Wählhebels (110) lösbar arretiert zu werden, wenn eine Position aus einer Rückwärtsposition (R) durch den Wählhebel (110) ausgewählt wird.

12. Die Vorrichtung (100) nach einem der vorhergehenden Ansprüche, wobei das Antriebselement eine Druck-Zugkabelanordnung (130) ist.

13. Die Vorrichtung (100) nach einem der Ansprüche 4-12, wobei das erste Verbindungselement (150) und das Wählhebelsperrelement (190) entsprechende bogenförmige Sperrkanten (155, 195) haben, die angepasst sind, um zusammen eine bogenförmige Sperrschnittstelle zu definieren, wenn das erste Sperrelement (150) und das Wählhebelsperrelement (190) bezüglich einander arretiert werden, wenn eine Position aus einer (P)-Position durch den Wählhebel (110) ausgewählt wird.

## Revendications

1. Un dispositif (100) de changement de vitesse de type « shift by wire » (passage des vitesses moyennant câble électrique) comprenant un levier sélecteur (110) monté de façon mobile sur un boîtier fixé, un élément de raccordement (120) monté de façon pivotante sur le boîtier fixé (105) et pouvant être relié de façon amovible au levier sélecteur (110) pour bloquer une boîte de vitesses d'un véhicule moyennant un élément d'actionnement (130) lorsque une position de parking (P) est choisie, et un mécanisme de blocage (140) lié au levier sélecteur (110) et à l'élément de raccordement (120) pour bloquer de façon amovible l'élément d'actionnement (130) et maintenir la boîte de vitesses du véhicule débloquée lorsqu'une position hors d'une position de parking (P) est choisie par le levier sélecteur (110),
**caractérisé en ce que**
l'élément de raccordement (120) a une partie d'extrémité d'embrayage qui est configurée comme une encoche (135) adaptée pour recevoir de manière amovible une partie d'embrayage correspondante du levier sélecteur (110) qui est configurée comme une goupille (115) s'étendant latéralement depuis le levier sélecteur (110) et définissant un élément en forme essentiellement de T adapté pour relier de façon amovible le levier sélecteur (110) avec l'élément de raccordement (120) de façon que :
- lorsqu'une position de parking (P) est choisie par le levier sélecteur (110), les parties d'embrayage (115, 135) sont embrayées l'une par rapport à l'autre bloquant la boîte de vitesses du véhicule, et
- lorsqu'une position hors de la position de parking (P) est choisie par le levier sélecteur (110), les parties d'embrayage (115, 135) sont débrayées l'une par rapport à l'autre, débloquant la boîte de vitesses du véhicule et le mécanisme de blocage (140) devient bloqué de façon à maintenir l'élément d'actionnement (130) dans une position telle qu'il ne peut pas être mû.

2. Le dispositif (100) selon la revendication 1, dans lequel le mécanisme de blocage (140) inclut un premier élément de blocage (150) lié à l'élément de raccordement (120) et qui peut être mû avec celui-ci, qui est adapté de façon à être fixé dans sa position lorsqu'une position hors d'une position de parking (P) est choisie par le levier sélecteur (110).

3. Le dispositif (100) selon la revendication 2, dans lequel le premier élément de blocage (150) est formé de façon intégrale avec l'élément de raccordement (120).

4. Le dispositif (100) selon la revendication 2 ou 3, dans lequel le mécanisme de blocage (140) inclut en outre un élément de blocage du levier sélecteur (190) lié au levier sélecteur (110) et qui peut être mû avec celui-ci, de façon à fixer le premier élément de blocage (150) dans sa position et donc l'élément d'actionnement (130) lorsqu'une position hors d'une position de parking (P) est choisie par le levier sélecteur (110).

5. Le dispositif (100) selon la revendication 4, dans lequel l'élément de blocage du levier sélecteur (190) est formé de façon intégrale avec le levier sélecteur (110).

6. Le dispositif (100) selon la revendication 4 ou 5, dans lequel le premier élément de blocage (150) est adapté de façon à être bloqué de façon amovible contre l'élément de blocage du levier sélecteur (190) moyennant un ajustage serré.

7. Le dispositif (100) selon l'une quelconque des revendications 4-6, dans lequel l'élément de blocage du levier sélecteur (190) est attaché à une partie de base (170) dans laquelle le levier sélecteur (110) est ajusté.

8. Le dispositif (100) selon l'une quelconque des revendications 4-7, dans lequel le levier sélecteur (110) est formé avec ou est attaché à un élément d'axe transversal (180) adapté pour permettre un mouvement de rotation longitudinal et latéral du levier sélecteur (110) pour des opérations manuelles de changement de vitesse, l'élément de blocage du levier sélecteur (190) étant formé avec ou étant attaché à l'élément d'axe transversal (180).

9. Le dispositif (100) selon l'une quelconque des revendications précédentes, comprenant en outre un second élément de blocage (160) lié à l'élément de raccordement (120) et pouvant être mû avec celui-ci, qui est adapté de façon à être fixé dans sa position lorsqu'une position hors d'une position de marche arrière (R) est choisie par le levier sélecteur (110).

10. Le dispositif (100) selon la revendication 9, dans lequel le premier élément de blocage (150) et le second élément de blocage (160) sont situés dans l'élément de raccordement (120) formant un angle l'un par rapport à l'autre.

11. Le dispositif (100) selon la revendication 9 ou 10, dans lequel le second élément de blocage (160) est adapté pour être fixé dans sa position de manière amovible contre la partie d'embrayage (115) du levier sélecteur (110) lorsqu'une position hors d'une position de marche arrière (R) est choisie par le levier sélecteur (110).

12. Le dispositif (100) selon l'une quelconque des revendications précédentes, dans lequel l'élément d'actionnement est un ensemble de câble tire-pousse (130).

13. Le dispositif (100) selon l'une quelconque des revendications 4-12, dans lequel le premier élément de blocage (150) et l'élément de blocage du levier sélecteur (190) ont des bords de blocage courbés correspondants (155, 195) adaptés pour définir conjointement une interface de blocage courbée lorsque le premier élément de blocage (150) et l'élément de blocage du levier sélecteur (190) sont bloqués l'un par apport à l'autre lorsqu'une position hors d'une position (P) est choisie par le levier sélecteur (110).
